(19) Europäisches Patentamt
European Patent Office
Office européen des brevets

(11) **EP 2 119 644 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(51) Int Cl.:
**B65G 15/54** (2006.01)    **B65G 17/06** (2006.01)
**B65G 17/08** (2006.01)

(21) Anmeldenummer: **09159871.4**

(22) Anmeldetag: **11.05.2009**

(54) **Verpackungsmaschine für Gebinde von Getränkebehältern und Fördereinrichtung hierfür**

Packaging machine and conveyor for group of drink containers

Machine d'emballage pour gerbes de récipients de boissons et dispositif d'acheminement correspondant

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.05.2008 DE 102008023940**

(43) Veröffentlichungstag der Anmeldung:
**18.11.2009 Patentblatt 2009/47**

(73) Patentinhaber: **Krones AG**
**93073 Neutraubling (DE)**

(72) Erfinder: **Napravnik, Christian**
**83026 Rosenheim (DE)**

(74) Vertreter: **Benninger, Johannes**
**Benninger & Eichler-Stahlberg**
**Patentanwälte**
**Dechbettener Strasse 10**
**93049 Regensburg (DE)**

(56) Entgegenhaltungen:
EP-A- 0 630 739    EP-A- 1 281 639
DE-A1- 2 436 922    US-A- 3 542 633
US-A- 5 360 379    US-A1- 2006 073 752

**Beschreibung**

Die vorliegende Erfindung betrifft eine Verpackungsmaschine für Gebinde von Getränkebehältern sowie eine Fördereinrichtung einer derartigen Verpackungsmaschine.

Zum Verpacken von Gebinden mit mehreren Getränkebehältern und/oder Flaschen werden die Getränkebehälter bzw. Flaschen auf Horizontalfördereinrichtungen gruppiert und in Gruppen mit einer definierten Anzahl von Behältern zusammengefasst. Diese definierte Anzahl von gruppierten Behältern wird zur besseren Handhabung meist mit einer Folienumwicklung versehen, so dass die Gebinde leicht transportiert, gestapelt und ggf. in dieser Gebindeform auch im Verkaufsraum präsentiert werden können.

Die Folienumwicklung wird mittels geeigneten Einrichtungen um das Gebinde geschlagen und anschließend durch Erwärmung so aufgeschrumpft, dass das Gebinde von der gespannten Folie fest umschlossen ist, so dass es gut transportiert und gehandhabt werden kann. Zur Erwärmung der Folie werden die Gebinde meist in eine Wärmekammer, einen sogenannten Schrumpftunnel eingebracht, in dem ausreichend hohe Temperaturen herrschen, die für ein Schrumpfen der Folie um ein gewünschtes Maß sorgen. Die hohen Temperaturen werden meist mittels Heizgebläsen erzeugt. Die Gebinde sind beim Durchfahren des Schrumpfkanals normalerweise auf einer Horizontalfördereinrichtung abgelegt, meist auf einer metallischen Förderkette.

Beim Durchfahren der Wärmezone wird von dem Transportband, beispielsweise einer Förderkette, Wärmeenergie aufgenommen, die nach dem Verlassen der Wärmezone zum Zweck des Abkühlens der Gebinde zumindest teilweise wieder abgegeben wird. Auf diese Weise entsteht ein nicht unerheblicher Energieaustrag aus der beheizten Zone, der einerseits durch verstärkte Wärmezufuhr in den Schrumpfkanal ausgeglichen werden muss. Andererseits birgt das zyklische Aufheizen und Abkühlen des Transportbandes die Gefahr, dass dort die zuvor gespeicherte und nicht vollständig wieder abgegebene Wärme zu einer erhöhten Temperatur des Transportbandes führt, die unter Umständen die zulässige Kontakttemperatur für die Folienverpackung übersteigt, weil damit deren Schmelztemperatur erreicht werden kann. Wird die Folie jedoch punktuell erweicht und/oder geschmolzen, so kann dies zu deren Beschädigung und/oder zum Anhaften von Folienstücken am Transportband sorgen.

Das Aufbringen einer geeigneten Beschichtung oder Ummantelung auf dem Transportband kann den Effekt des Anhaftens von Folienstücken und -resten reduzieren. Eine derartige Beschichtung bzw. Ummantelung kann beispielsweise durch PTFE-Kunststoff gebildet sein, wie sie bereits aus der Lebensmittelindustrie bekannt ist.

So zeigt die US 36 46 880 A eine Gareinrichtung, einen sogenannten Kochgrill, der ein mit PTFE beschichtetes Förderband zur Ablage von Gargut aufweist. Die Beschichtung soll das Anhaften der zu garenden Speisen am Förderband verhindern.

Eine Gareinrichtung mit einem Endlos-Förderband, auf dem Speisen gegart werden sollen, ist weiterhin aus der EP 0 655 215 A1 bekannt. Das Förderband dient zum Transport der Speisen und gleichzeitig zu deren Garen. Das Förderband besteht aus einem mit PTFE beschichteten Kunststoffband. Auch hierbei dient die Beschichtung dazu, das Anhaften des Garguts am Förderband zu verhindern.

US 5 360 379 beschreibt eine Verpackungsmaschine gemäß dem Oberbegriff des Anspruchs 11 und eine Fördereinrichtung gemäß dem Oberbegriff des Anspruchs 1.

Ein Ziel der vorliegenden Erfindung besteht darin, eine Fördereinrichtung und eine Verpackungsmaschine für Gebinde von Flaschen und Getränkebehältern zur Verfügung zu stellen, bei der die Nachteile des Standes der Technik vermieden werden und die einen Energie sparenden Betrieb ermöglichen.

Diese Ziele der Erfindung werden mit den Gegenständen der unabhängigen Ansprüche erreicht. Merkmale vorteilhafter Weiterbildungen der Erfindung ergeben sich aus den jeweiligen abhängigen Ansprüchen.

Die Erfindung betrifft eine Fördereinrichtung für zu Gebinde gruppierte und mit einer Umwicklung aus Folie versehene Getränkebehälter. Die Fördereinrichtung umfasst eine Horizontalfördereinrichtung, die eine endlos umlaufende Förderkette aufweist, deren bewegliche Glieder und/oder Maschen jeweils eine Stützstruktur aus Metall oder Glas- bzw. Aramidfasern oder einem anderen geeigneten Fasergewebe und Auflagebereiche für die Gebinde und/oder Umhüllungen aufweisen, die wesentliche Anteile an PTFE-Kunststoff aufweisen. Zumindest die Auflagebereiche und/oder Umhüllungen aus Kunststoff weisen eine Stärke auf, die mindestens 10% der Stärke der von ihnen bedeckten und/oder umhüllten Stützstruktur beträgt. Wahlweise können die Auflagebereiche und/oder Umhüllungen aus Kunststoff auch eine Stärke aufweisen, die 35%

oder mehr der Stärke der von ihnen bedeckten und/oder umhüllten Stützstruktur entspricht.

Ein sinnvoller Wert für die Stärke der Auflagebereiche und/oder Umhüllungen kann mindestens 0,1 mm betragen. Vorzugsweise jedoch weisen die Auflagebereiche und/oder Umhüllungen eine Stärke von circa 0,3 mm oder mehr auf.

Die die Gebinde tragenden Bereiche der Stützstrukturen der Fördereinrichtung können jeweils eine Stärke von mindestens 1,4 mm, ggf. auch von 2 mm oder mehr aufweisen. Diese Stützstrukturen können vorzugsweise aus Metall, insbesondere aus Stahldraht, oder aus Glas- bzw. Aramidfasern gebildet sein.

Durch die Kombination der metallischen bzw. durch Glas- oder Aramidfasern gebildeten Stützstruktur mit einer Stärke von circa 1,4-2 mm oder mehr und der diese zumindest im Bereich der Auflageflächen für die Gebinde umhüllenden Auflagebereiche und/oder Umhüllungen aus PTFE-Kunststoff wird eine Fördereinrichtung zur Verfügung gestellt, die eine sehr geringe Wärmeleitfähigkeit zur Umgebung und eine geringe Wärmespeicherfähigkeit aufweist und dadurch einen sehr Energie sparenden Betrieb ermöglicht. Da zudem die Ummantelung einen Teil der mechanischen Belastung der Förderkette bzw. des Transportbandes aufnehmen kann, kann die Stützstruktur ggf. dünner ausgeführt werden, was eine geringere Wärmespeicherfähigkeit zur Folge hat. Da bei der thermischen Behandlung von Produkten mittels eines Fluids, insbesondere mit Heißluft, die Förderketten bzw. Transportbänder mitsamt den darauf bewegten Produkten stark erwärmt werden, beispielsweise beim Durchfahren eines Heißluftofens, erfolgt nicht nur ein Energieeintrag in die Gebinde, sondern es wird beim Durchfahren dieser Zone auch vom Transportband Energie in Form von Wärme aufgenommen, und nach dem Verlassen der beheizten Zone bzw. im Rücklauf wieder abgegeben. So entsteht ein Energieaustrag aus der beheizten Zone. Dieser Energieverlust kann mittels der erfindungsgemäßen Fördereinrichtung mit ihrer geeigneten geometrischen Ausführung und geeigneter Materialwahl des Transportbandes reduziert werden.

In der Lebensmittelindustrie werden speziell auf die Produktionsbedingungen angepasste Transportbänder bzw. Förderketten verwendet. Filigraner ausgeführte Transportbänder nehmen weniger Energie auf. Sinnvoll ist zudem, die Transportbänder mit Kunststoff zu beschichten, um die Haftneigung zum Produkt zu reduzieren oder Prägungen auf Produkte aufzubringen. Ein besonders geeignetes Beschichtungsmaterial ist PTFE-Kunststoff. Wichtig für eine energetische Betrachtung und Auslegung ist jedoch die Stärke der Beschichtung im Verhältnis zur Stärke des Trägermaterials, da bei einer zu dünn aufgebrachten Beschichtung die Energieaufnahme des Transportbandes mit Beschichtung höher ist als ohne Beschichtung. Aus diesem Grund ist bei der erfindungsgemäßen Transporteinrichtung eine Stärke der PTFE-Beschichtung von mindestens 10% der Materialstärke der Stützstruktur bzw. des Trägermaterials zu wählen, um die geforderte Wärmeisolierung und damit die gewünschte Energieeinsparung zu erhalten. So konnte beispielsweise bei einer Draht- bzw. Faserstärke von circa 1,6 mm und einer Auflagenstärke von circa 0,4 mm für die PTFE-Beschichtung eine Energieersparnis durch verringerte Wärmespeicherungseffekte des Transportbandes von mindestens 15% nachgewiesen werden. Diese Energieeinsparung hängt von verschiedenen Einflussgrößen ab, so beispielsweise von der Lufttemperatur im Schrumpfkanal, von der Fördergeschwindigkeit und damit von der Einwirkungsdauer der Wärme, von der Luftgeschwindigkeit des Heißluftgebläses etc. Eine entsprechend stärkere Beschichtung kann die Wärmeleitfähigkeit der Fördereinrichtung zur Umgebung weiter reduzieren und damit einen höheren Energiespareffekt zur Folge haben.

Um die Abriebfestigkeit und die mechanische Stabilität der Beschichtung zu verbessern, können die Auflagebereiche und/oder Umhüllungen durch einen Verbundwerkstoff aus PTFE-Kunststoff und darin eingebetteten Verstärkungsfasern gebildet sein. Die Förderkette kann beispielsweise eine Netzstruktur aufweisen. Im Vergleich mit Stahl ist die Verwendung von Glas- bzw. Aramidfasergewebe energetisch günstiger, da sowohl die Wärmeleitfähigkeit als auch die auf das Gewicht bezogene Wärmekapazität gegenüber Stahl wesentlich geringer ist.

Weiter ist denkbar, speziell bei metallischen Stützstrukturen, glasfaserverstärktes PTFE als Auflagebereich und/oder Umhüllung zu verwenden, um die mechanischen Eigenschaften des PTFE, beispielsweise die Abriebfestigkeit, zu verbessern. Die Verstärkung aus Glasfaser wird nicht mit Fasergewirken erreicht, sondern dadurch, dass in die PTFE-Schmelze kurze Glasfasern eingemischt werden. Der Anteil dieser Glasfasern liegt beispielsweise bei 25% oder höher.

Die Erfindung betrifft weiterhin eine Verpackungsmaschine für zu Gebinden gruppierte und mit einer Umwicklung aus Folie versehene Getränkebehälter, umfassend einen Wärmekanal zum Erwärmen der die Gebinde umwickelnden Folie und zum Schrumpfen der Folie, und eine durch den Wärmekanal geführte Horizontalfördereinrichtung für die Gebinde, die eine endlos umlaufende Förderkette aufweist, deren bewegliche Glieder bzw. Maschen jeweils eine Stützstruktur bevorzugt aus Metall oder Glas- bzw. Aramidfasergewebe und Auflagebereiche für die Gebinde und/oder Umhüllungen aufweisen, die wesentliche Anteile an PTFE-Kunststoff aufweisen. Auch hierbei ist vorgesehen, dass die Auflagebereiche und/oder Umhüllungen aus Kunststoff eine Stärke aufweisen, die mindestens 10% der Stärke der von ihnen bedeckten und/oder umhüllten Stützstruktur entspricht.

Um die Wärmeübergangseffekte zwischen den verschiedenen verwendeten Materialien abschätzen zu können, ist es sinnvoll, mit der sogenannten Peclet-Gleichung zu rechnen, die in der Thermodynamik das Verhältnis von konvektiv transportierter zu geleiteter Wärmemenge wiedergibt. In diesem Zusammenhang ist die Biot-Zahl zu maximieren. Diese Biot-Zahl (Formelzeichen: Bi) bezeichnet das Verhältnis vom äußeren Wärmeübergang, also dem Wärmetransport von der Oberfläche zum umgebenden Medium, zum inneren Wärmeübergang, der Wärmeleitung durch den Körper. Sinnvollerweise ist für die Biot-Zahl ein Wert von mindestens 1,0 zu wählen, so dass gilt:

$$Bi = (2^*\alpha^*r)/\lambda \geq 1,0$$

mit:

Bi    Biotzahl der Draht- bzw. Faserkonfiguration,

α    Konvektiver Wärmeübergangswiderstand der Oberfläche,

r    Radius des Metalldrahtes bzw. der Faser,

λ    Wärmeleitfähigkeit des Isolierstoffes.

Der konvektive Wärmeübergangswiderstand der Oberfläche wird durch den Prozess und den Draht- bzw. Faserdurchmesser vorgegeben, die Wärmeleitfähigkeit des Isolierstoffes durch das Mantelmaterial. Bei Biot-Zahlen kleiner 1 steigt der Verlust trotz Erhöhung der Isolierstärke zunächst an, so dass eine isolierende Wirkung erst auftritt, wenn der entdimensionierte Wärmefluss der der Biotzahl entsprechenden Kennlinie unter den Wert 1 fällt. Eine Energieersparnis wäre zum Beispiel bei einer Biot-Zahl von 0,5 erst erreichbar, wenn die Stärke der Isolierung 2 Mal dicker ist, als der Durchmesser des blanken Drahtes bzw. des unisolierten Fasergewebes. Bei Biotzahlen größer 1 dagegen bringt die Isolierung sofort einen energetisch positiven Effekt.

Weitere Merkmale, Ziele und Vorteile der vorliegenden Erfindung gehen aus der nun folgenden detaillierten Beschreibung bevorzugter Ausführungsformen der Erfindung hervor, die als nicht einschränkende Beispiele dienen und auf die beigefügten Zeichnungen Bezug nehmen. Gleiche Bauteile weisen dabei grundsätzlich gleiche Bezugszeichen auf und werden teilweise nicht mehrfach erläutert.

Fig. 1    zeigt eine perspektivische Detailansicht eines Ausführungsbeispiels ei- ner Förderkette 10 einer erfindungsgemäßen Fördereinrichtung, wobei die Stützstruktur 22 aus Metall ist.

Fig. 2    zeigt in einem Diagramm einen Zusammenhang zwischen einem Durchmesserverhältnis von Draht bzw. Faser zu Beschichtung und einem Wärmefluss für verschiedene Biot-Zahlen.

Fig. 3    zeigt in einem Diagramm einen Zusammenhang zwischen einer Isolie- rungsstärke bei einem Kerndraht- bzw. Faserdurchmesser von 1,6 mm und dem Wärmefluss für verschiedene Biot-Zahlen.

Fig. 4    zeigt in einem Diagramm einen Zusammenhang zwischen einer Isolie- rungsstärke bei einem Kerndrahtdurchmesser von 4 mm und dem Wär- mefluss für verschiedene Biot-Zahlen.

Fig. 5    zeigt in einer Draufsicht einen größeren Ausschnitt der Förderkette 10 nach Figur 1.

Fig. 6    zeigt eine Draufsicht eines anderen Ausführungsbeispiels einer Förder- kette 10 einer erfindungsgemäßen Fördereinrichtung, wobei die Stütz- struktur 22 aus Metall mit Teflon-Umhüllungen 20 ist.

Fig. 7    zeigt eine perspektivische Ansicht der Förderkette 10 nach Figur 6.

Fig. 8    zeigt eine perspektivische Ansicht eines weiteren Ausführungsbeispiels einer Förderkette 10 einer erfindungsgemäßen Fördereinrichtung, wobei die Stützstruktur 22 ein Glas- bzw. Aramidfasergewebe aus einer Lage 16 mit Teflon-Auflagebereichen 18 ist.

Fig. 9    zeigt eine perspektivische Ansicht eines weiteren Ausführungsbeispiels einer Förderkette 10 einer erfindungsgemäßen Fördereinrichtung, wobei die Stützstruktur 22 ein Glas- bzw. Aramidfasergewebe aus mehreren Lagen 16 mit Teflon-Auflagebereichen 18 ist.

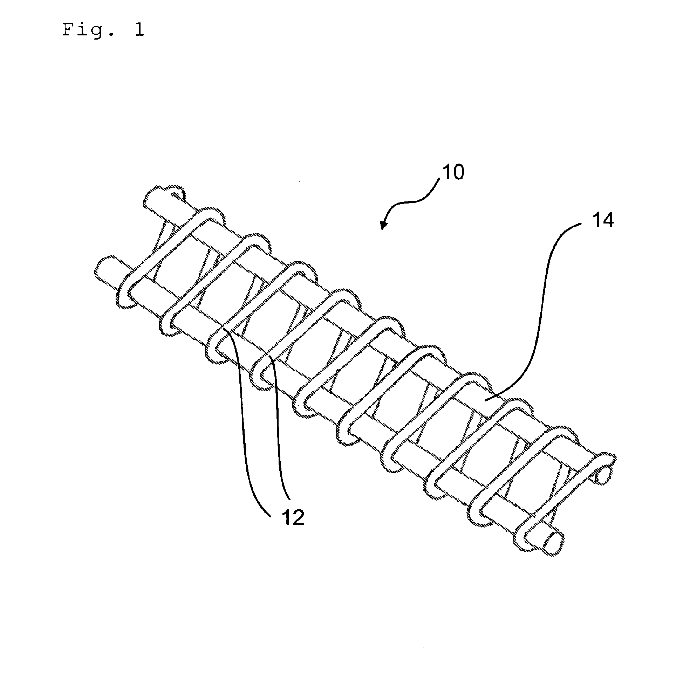

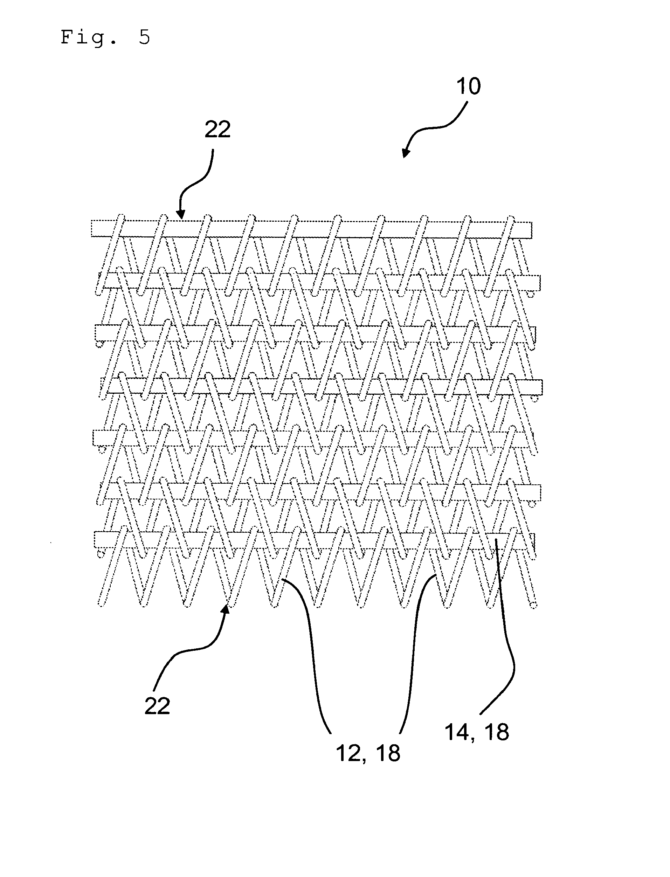

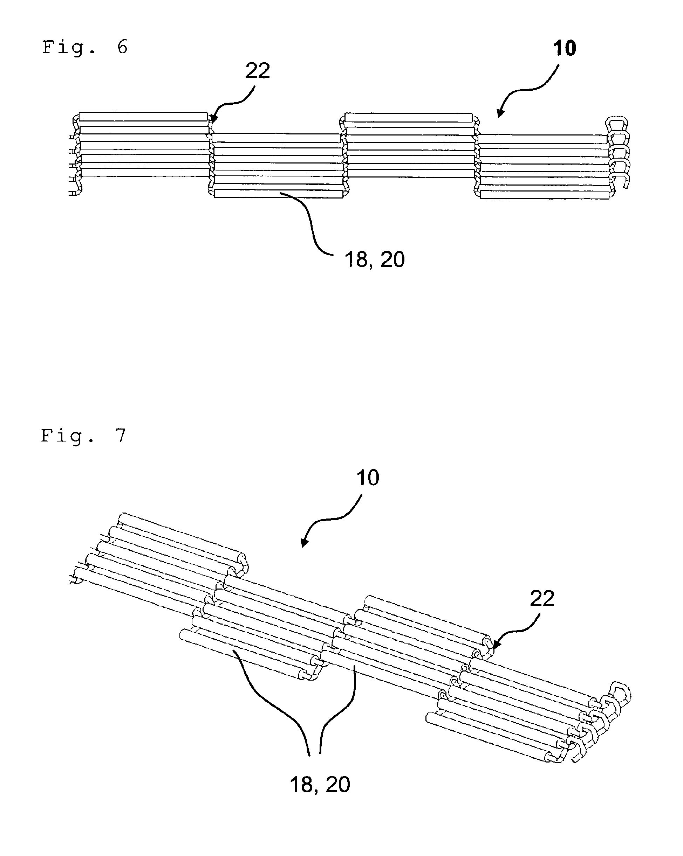

Die schematischen Darstellungen der Figuren 1 und 5 zeigen eine perspektivische Detailansicht bzw. eine Draufsicht eines größeren Ausschnitts eines Ausführungsbeispiels einer Förderkette 10 einer erfindungsgemäßen Fördereinrichtung. Es handelt sich dabei um eine Förderkette 10 aus Metalldraht, zum Beispiel aus Stahldraht, welches mit PTFE-Kunststoff in einer definierten Stärke ummantelt und zu einem Netzgitter-Band verarbeitet ist. Die Darstellungen der Figuren 1 und 5 zeigen eine beispielhafte Geometrie der Förderkette 10, die selbstverständlich die unterschiedlichsten Gestaltungen haben kann (beispielsweise gemäß den Figuren 7 bis 9). Die Stützstruktur 22 umfasst dünnen Wickeldraht 12, der durch Querdrähte 14 gehalten wird. Die obersten Punkte des Wickeldrahts 12 und die obersten Punkte der Querdrähte 14 bilden die Auflagebereiche 18 für die zu transportierenden Gebinde (nicht dargestellt).

Die schematischen Darstellungen der Figuren 6 und 7 zeigen eine Förderkette 10 mit einer im Vergleich zu den Figuren 1, 5 anderen Geometrie der Stützstruktur 22. Die Stützstruktur 22 der Förderkette 10 ist ebenfalls aus Metall. Die Auflagebereiche 18 der Stützstruktur 22 werden aus den obersten Punkten von Umhüllungen 20 gebildet. Die Umhüllungen 20 sind aus einem Teflonmaterial und um Teilbereiche der Stützstruktur 22 aus Metall angebracht.

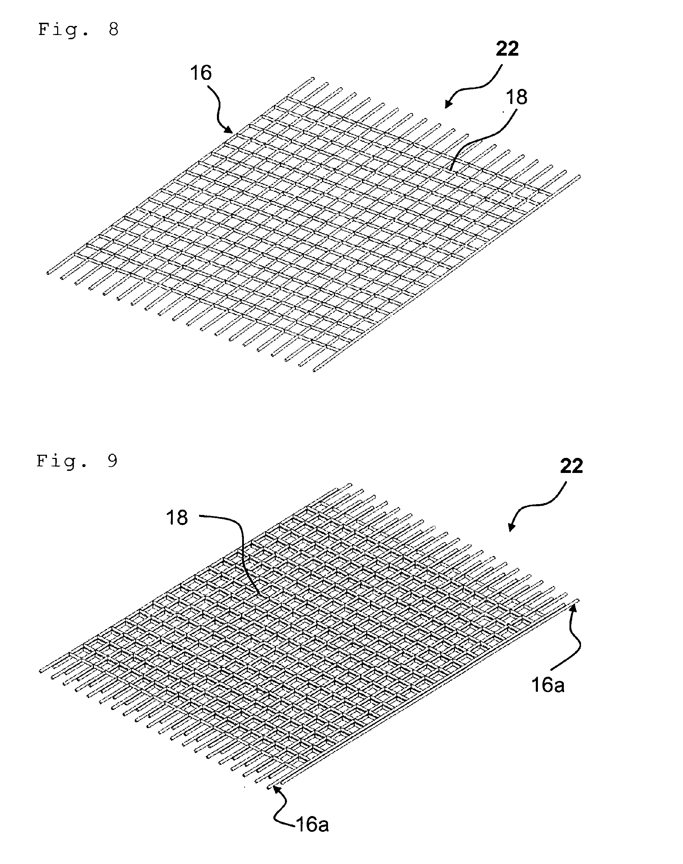

Die schematischen Darstellungen der Figuren 8 und 9 zeigen zwei weitere Ausführungsbeispiele einer Stützstruktur 22 einer erfindungsgemäßen Fördereinrichtung. Die Stützstruktur 22 besteht aus einem Glasfasergewebe. In Fig. 8 umfasst die Stützstruktur 22 nur eine Lage 16 des Gewebes, deren oberste Punkte einen Auflagebereich 18 bilden. In Fig. 9 umfasst die Stützstruktur 22 eine untere Lage 16a und eine obere Lage 16b des Gewebes. Die obersten Punkte der oberen Lage 16b bilden einen Auflagebereich 18 für die zu transportierenden Gebinde. Bei beiden Ausführungsformen nach Fig. 8, 9 sind die Auflagebereiche 18 als Teflonbeschichtungen ausgebildet. Das Glas-oder Aramidfasergewebe ist also teflonbeschichtet. Es können auch mehr als zwei Lagen 16 vorgesehen sein (nicht dargestellt). Die Stützstrukturen 22 der Fig. 8, 9 weisen im Vergleich zu Fig. 1, 5, 6, 7 wiederum eine andere Geometrie auf, hier eine Gitterstruktur.

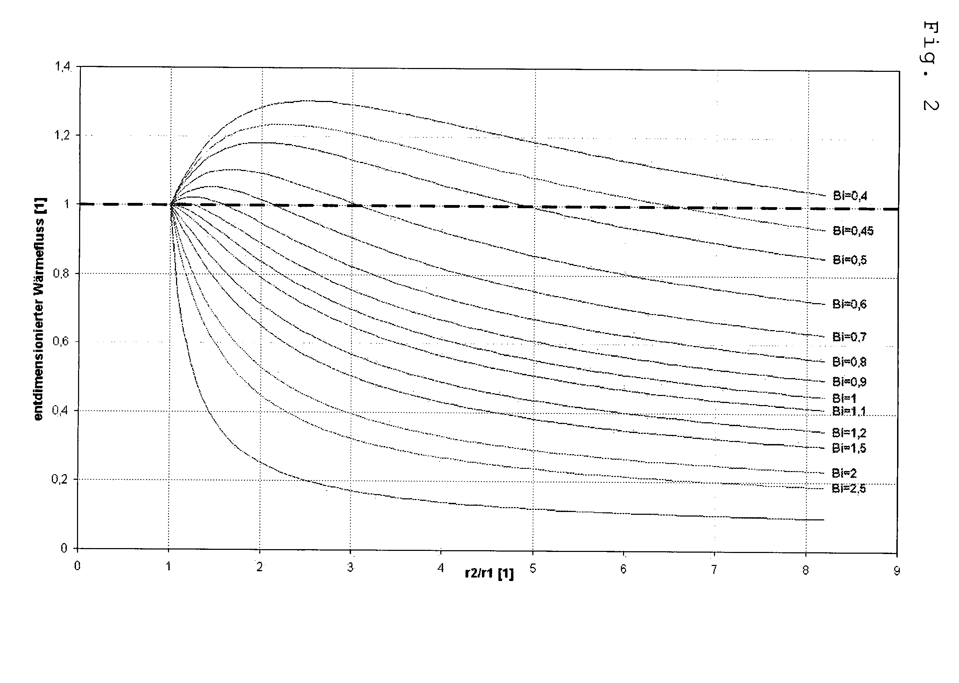

Das Diagramm der Fig. 2 zeigt die Abhängigkeit der entdimensionierten Wärmeverlustrate, also des Energieaustrages der Förderkette 10, von der Biot-Zahl der Draht- oder Faserkonfiguration. Auf der Abszisse des Diagramms ist das Durchmesserverhältnis r2/r1 aufgetragen. Dabei bezeichnet r1 den Draht- bzw. oder Faserradius ohne Ummantelung und r2 den Außenradius des Drahts bzw. der Faser mit der Isolierung bzw. Ummantelung. Auf der Ordinate des Diagramms ist der entdimensionierte Wärmefluss aufgetragen. Es wird daraus deutlich, dass bei Biot-Zahlen kleiner 1 der Verlust trotz Erhöhung der Isolierstärke zunächst ansteigt, und dass eine isolierende Wirkung erst auftritt, wenn der entdimensionierte Wärmefluss der der Biotzahl entsprechenden Kennlinie unter den Wert 1 fällt. Eine Energieersparnis wäre somit bei einer beispielhaft gewählten Biot-Zahl von 0,5 erst erreichbar, wenn die Stärke der Isolierung den doppelten Wert der Stärke des blanken Drahtes bzw. der Faser betrüge. Bei Biotzahlen größer 1 bringt dagegen die Isolierung in jeder gewählten Stärke einen signifikanten energetisch positiven Effekt.

Bei Draht- bzw. Fasergewebestärken von z.B. D = 1,6 mm und einem konvektivem Wärmeübergangswiderstand der Oberfläche von z.B. 145 W/m$^2$K (prozessbedingt) ergibt sich bei einer PTFE-Isolierung ($\lambda$P-TFE = 0,26 W/mK) eine Biotzahl von circa Bi = 0,9. Eine Isolierung würde also erst ab einer Stärke von circa 0,25 mm einen energetischen Vorteil bringen. Eine dünnere Isolierung würde ungünstigere energetische Werte liefern als der blanke Draht bzw. das unisolierte Fasergewebe.

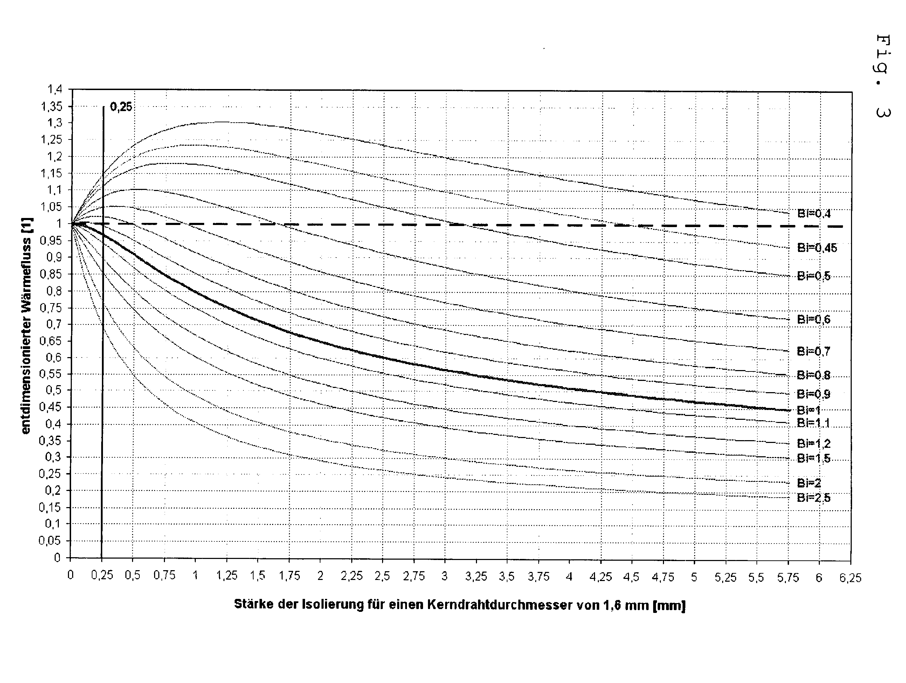

Das Diagramm der Fig. 3 zeigt die Abhängigkeit der Energieersparnis von der Stärke der Isolierung für verschiedene Biotzahlen für einen Kerndrahtdurchmesser bzw. einen Kernfaserdurchmesser von 1,6 mm. Da die Isolierung eine signifikante Verbesserung der energetischen Situation bewirken soll, um die höheren Kosten für die Förderkette zu rechtfertigen, was bei einer Reduktion der Energieaufnahme um mindestens 15% als gegeben angesehen werden kann, kann die Stärke der Isolierung so weit erhöht werden, bis die gewünschte Energieersparnis erreicht wird. Im gezeigten Beispiel weist die Beschichtungsstärke circa 1,0 mm auf, so dass der Gesamtdurchmesser des isolierten Drahtes bzw. der Faser also 3,6 mm beträgt.

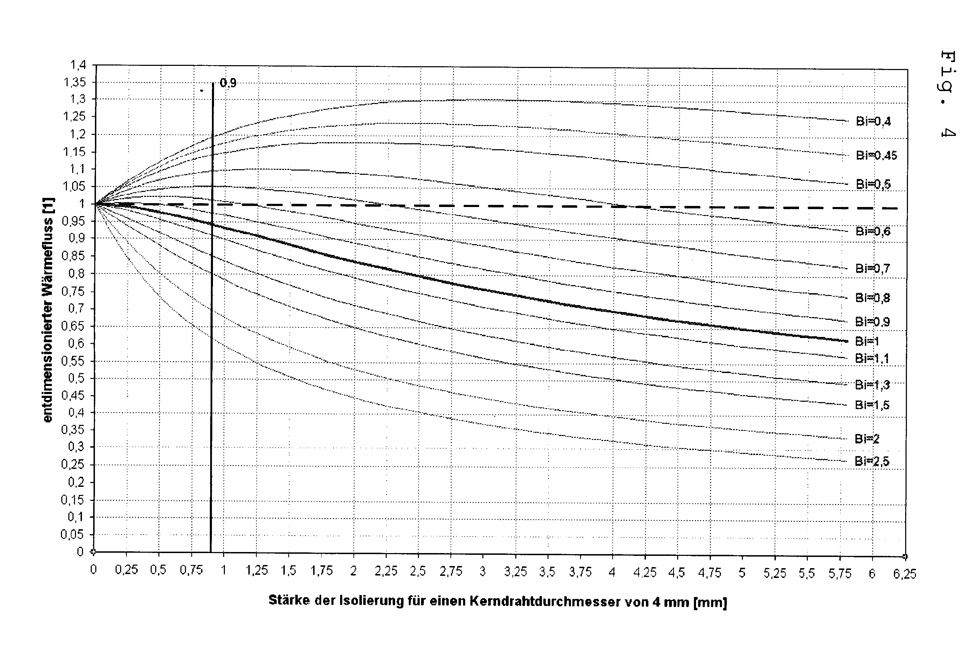

Aus der Fig. 1 ist ersichtlich, dass der dünnere Wickeldraht 12 der Stützstruktur 22 der Förderkette 10 durch Querdrähte 14 gehalten wird. Da diese Querdrähte 14 dicker sind, ergibt sich für eine Stärke von circa 4 mm bei gleichen Umströmungsbedingungen eine Biotzahl von Bi = 1,3. Das bedeutet, dass für eine 15%ige Verbesserung der energetischen Situation eine Isolierschicht mit einer Stärke von 0,9 mm ausreichend ist. Dieser Zusammenhang kann dem Diagramm der Fig. 4 entnommen werden.

Bei den Stützstrukturen 22 aus Fasergewebe nach den Fig. 8 und 9 werden keine Stützdrähte benötigt, was zu einer Gewichtsersparnis im Vergleich mit Stützstrukturen 22 aus Metallen (Fig. 1, 5, 6, 7) führt. Die Gewichtsersparnis und die wiederum im Vergleich mit Metallen geringere Wärmeleitfähigkeit und geringere gewichtsbezogene Wärmekapazität der Stützstrukturen 22 aus Glas- oder Aramidfasergewebe bewirken allesamt eine Energieersparnis.

Die Erfindung ist nicht auf die vorstehenden Ausführungsbeispiele beschränkt. Vielmehr ist eine Vielzahl von Varianten und Abwandlungen denkbar, die in den Schutzbereich der Ansprüche fallen.

Bezugszeichenliste

| | |
|---|---|
| 10 | Förderkette (Transportband) |
| 12 | Wickeldraht |
| 14 | Querdraht |
| 16, 16a, 16b | Lage |
| 18 | Auflagebereich |
| 20 | Umhüllung |
| 22 | Stützstruktur |

**Patentansprüche**

1.  Fördereinrichtung für zu Gebinden gruppierte und mit einer Umwicklung aus Folie versehene Getränkebehälter, mit einer Horizontalfördereinrichtung, die eine endlos umlaufende Förderkette (10) aufweist, deren bewegliche Glieder und/oder Maschen jeweils eine Stützstruktur (22) aufweisen, deren bewegliche Glieder und/oder Maschen Auflagebereiche (18) und/oder Umhüllungen (20) für das Fördern der Gebinde aufweisen, wobei die Auflagebereiche (18) und/oder Umhüllungen (20) wesentliche Anteile an PTFE-Kunststoff aufweisen, wobei die Auflagebereiche (18) und/oder Umhüllungen (20) aus dem PTFE-Kunststoff eine Stärke aufweisen, die mindestens 10% der Stärke der von ihnen bedeckten und/oder umhüllten Stützstruktur (22) entspricht, **dadurch gekennzeichnet, dass** die Förderkette (10) aus der Stützstruktur (22) und den Auflagebereichen (18) und/oder Umhüllungen (20) eine Vielzahl von Öffnungen aufweist, so dass die mit der Folie umwickelten Getränkebehälter während des Aufschrumpfens der Folie auf die Getränkebehälter allseitig mittels Heißluft beaufschlagbar sind, und dass die Förderkette (10) aus der Stützstruktur (22) und den Auflagebereichen (18) und/oder Umhüllungen (20) eine Biot-Zahl Bi = (2*$\alpha$*r)/$\lambda$ größer oder gleich 1,0 aufweist, wobei $\alpha$ der konvektive Wärmeübergangswiderstand der Oberfläche der Stützstruktur (22), r der Radius der Stützstruktur (22) und λ die Wärmeleitfähigkeit der Auflagebereiche (18) und/oder Umhüllungen (20) ist.

2.  Fördereinrichtung nach Anspruch 1, wobei die Stützstruktur (22) im Wesentlichen aus einem Metall oder einem Glasfasergewebe oder einem Aramidfasergewebe bestehen.

3.  Fördereinrichtung nach einem der Ansprüche 1 bis 2, wobei die Auflagebereiche (18) und/oder Umhüllungen (20) eine Stärke von mindestens 0,1 mm aufweisen.

4.  Fördereinrichtung nach Anspruch 3, wobei die Auflagebereiche (18) eine Stärke von mindestens 0,3 mm aufweisen.

5.  Fördereinrichtung nach einem der Ansprüche 1 bis 4, wobei die Auflagebereiche (18) und/oder Umhüllungen (20) durch einen Verbundwerkstoff aus PTFE-Kunststoff und darin eingebetteten Verstärkungsfasern gebildet sind.

6.  Fördereinrichtung nach einem der Ansprüche 1 bis 5, wobei die Stützstrukturen (22) jeweils eine Stärke von mindestens 1,4 mm aufweisen.

7.  Fördereinrichtung nach einem der Ansprüche 1 bis 6, wobei die Stützstrukturen (22) aus Stahldraht gebildet sind.

8.  Fördereinrichtung nach einem der Ansprüche 1 bis 7, wobei die die Gebinde tragenden Bereiche der Stützstrukturen (22) aus Metall jeweils eine Stärke von mindestens 2 mm aufweisen.

9.  Fördereinrichtung nach einem der Ansprüche 1 bis 8, wobei die Förderkette (10) eine Netzstruktur aufweist.

10.  Fördereinrichtung nach einem der Ansprüche 1 bis 9, wobei die Förderkette (10) mehrere Lagen (16, 16a, 16b) umfasst.

11.  Verpackungsmaschine für zu Gebinden gruppierte und mit einer Umwicklung aus Folie versehene Getränkebehälter, umfassend einen Wärmekanal zum Erwärmen der die Gebinde umwickelnden Folie und zum Schrumpfen der Folie, und eine durch den Wärmekanal geführte Horizontalfördereinrichtung für die Gebinde, die eine endlos umlaufende Förderkette (10) aufweist, deren bewegliche Glieder und/oder Maschen jeweils eine Stützstruktur (22) aufweisen, deren bewegliche Glieder und/oder Maschen Auflagebereiche (18) und/oder Umhüllungen (20) für das Fördern der Gebinde aufweisen, wobei die Auflagebereiche (18) und/oder Umhüllungen (20) wesentliche Anteile an PTFE-Kunststoff aufweisen, wobei die Auflagebereiche (18) und/oder Umhüllungen (20) aus dem PTFE-Kunststoff eine Stärke aufweisen, die mindestens 10% der Stärke der von ihnen bedeckten und/oder umhüllten Stützstruktur (22) entspricht, **dadurch gekennzeichnet, dass** die Förderkette (10) aus der Stützstruktur (22) und den Auflagebereichen (18) und/oder Umhüllungen (20) eine Vielzahl von Öffnungen aufweist, so dass die mit der Folie umwickelten Getränkebehälter während des Aufschrumpfens der Folie auf die Getränkebehälter allseitig mittels Heißluft beaufschlagbar sind, und dass die Förderkette (10) aus der Stützstruktur (22) und den Auflagebereichen (18) und/oder Umhüllungen (20) eine Biot-Zahl Bi = $(2 \cdot \alpha \cdot r)/\lambda$ größer oder gleich 1,0 aufweist, wobei $\alpha$ der konvektive Wärmeübergangswiderstand der Oberfläche der Stützstruktur (22), r der Radius der Stützstruktur (22) und λ die Wärmeleitfähigkeit der Auflagebereiche (18) und/oder Umhüllungen (20) ist.

12.  Verpackungsmaschine nach Anspruch 11 mit einer Fördereinrichtung gemäß einem der Ansprüche 2 bis 10.

## Claims

1.  Conveying means for beverage containers that are grouped as packs and wrapped with film, comprising a horizontal conveying means (10) including an endlessly circulating conveyor chain, whose movable members and/or links each have a supporting structure (22), whose movable members and/or links each have contact areas (18) and/or wrappings (20) for the convey of the packs, whereby the contact areas (18) and/or wrappings (20) include significant portions of PTFE plastic, whereby the contact areas (18) and/or wrappings (20) of PTFE plastic have a thickness corresponding to at least 10% of the thickness of the supporting structure (22) covered and/or coated therewith **characterized in that** the conveying means (10) comprising the supporting structure (22) and the contact areas (18) and/or wrappings (20) has a plurality of openings, so that hot air can be blown around the containers from all sides during the shrinking of the film around the wrapped beverage containers, and that the conveying means (10) comprising the supporting structure (22) and the contact areas (18) and/or wrappings (20) has a Biot number Bi = $(2 \cdot \alpha \cdot r)/\lambda$ which is bigger or equals 1.0, whereby $\alpha$ is the convective heat transfer resistance of the supporting structure (22), r is the radius of the supporting structure (22), and λ is the thermal conductivity of the contact areas (18) and/or wrappings (20).

2.  Conveying means according to claim 1, wherein the supporting structure (22) is essentially made of metal or glass fiber fabric or aramid fiber fabric.

3. Conveying means according to one of the claims 1 to 2, wherein the contact areas (18) and/or wrappings (20) have a thickness of at least 0.1 mm.

4. Conveying means according to claim 3, wherein the contact areas (18) have a thickness of at least 0.3 mm.

5. Conveying means according to one of the claims 1 to 4, wherein the contact areas (18) and/or wrappings (20) are made of a composite material including PTFE plastic and reinforcing fibers embedded therein.

6. Conveying means according to one of the claims 1 to 5, wherein the supporting structures (22) each have a thickness of at least 1,4 mm .

7. Conveying means according to one of the claims 1 to 6, wherein the supporting structure (22) is made of steel wire.

8. Conveying means according to one of the claims 1 to 7, wherein the pack-bearing areas of the supporting structures made of metal each have a thickness of at least 2 mm.

9. Conveying means according to one of the claims 1 to 8, wherein the conveyor chain (10) has a net-like structure.

10. Conveying means according to one of the claims 1 to 9, wherein the conveyor chain (10) comprises a plurality of layers (16, 16a, 16b).

11. A packaging machine for beverage containers that are grouped as packs and wrapped with film, comprising a heating channel for heating the film wrapped around the packs and for shrinking the film, and a horizontal conveying means for the packs passing through the heating channel which includes an endlessly circulating conveyor chain (10) whose movable members and/or links each have a supporting structure (22), whose movable members and/or links each have contact areas (18) and/or wrappings (20) for the convey of the packs, whereby the contact areas (18) and/or wrappings (20) include significant portions of PTFE plastic, whereby the contact areas (18) and/or wrappings (20) of PTFE plastic have a thickness corresponding to at least 10% of the thickness of the supporting structure (22) covered and/or coated therewith **characterized in that** the conveying means (10) comprising the supporting structure (22) and the contact areas (18) and/or wrappings (20) has a plurality of openings, so that hot air can be blown around the containers from all sides during the shrinking of the film around the wrapped beverage containers, and that the conveying means (10) comprising the supporting structure (22) and the contact areas (18) and/or wrappings (20) has a Biot number $Bi = (2*\alpha*r)/\lambda$ which is bigger or equals 1.0, whereby $\alpha$ is the convective heat transfer resistance of the supporting structure (22), r is the radius of the supporting structure (22), and $\lambda$ is the thermal conductivity of the contact areas (18) and/or wrappings (20).

12. A packaging machine according to claim 1 with a conveying means according to one of the claims 1 to 10.

## Revendications

1. Equipement de manutention de récipients de boissons groupés en emballages et enrobés d'une feuille, avec un équipement de manutention horizontal qui présente une chaine de manutention (10) à circulation infinie dont les chainons mobiles et/ou maillons présentent chacun une structure d'appui (22), dont les chainons mobiles et/ou maillons présentent des zones d'appui (18) et/ou des enveloppes (20) pour la manutention des emballages, étant donné que les zones d'appui (18) et/ou enveloppes (20) présentent des parts considérables en matière plastique PTFE, étant donné que les zones d'appui (18) et/ou enveloppes (20) en matière plastique PTFE ont une épaisseur qui correspond au moins à 10 % de l'épaisseur de la structure d'appui (22) qu'elles recouvrent et/ou enveloppent, **caractérisé en ce que** la chaîne de manutention (10) présente une pluralité d'orifices de la structure d'appui (22) et des zones d'appui (11) et/ou enveloppes (30), de manière à ce que les récipients de boissons enrobés de la feuille puissent être alimentés sur tous les côtés au moyen de l'air chaud pendant l'emmanchement de la feuille sur les récipients de boissons, et **en ce que** la chaine de manutention (10) de la structure d'appui (22) et des zones d'appui (18) et/ou enveloppes présente un nombre de Biot $Bi = (2*\alpha*r)/\lambda$ supérieur ou égal à 1,0, où $\alpha$ est la résistance à la transmission de chaleur convective de la surface de la structure d'appui (22), r le rayon de la structure d'appui (22) et $\lambda$ la conductibilité thermique des zones d'appui (18) et/ou enveloppes (20).

2. Equipement de manutention selon la revendication 1, la structure d'appui (22) se composant essentiellement d'un métal ou d'un tissu en fibre de verre ou d'un tissu en fibre d'aramide.

3. Equipement de manutention selon l'une quelconque des revendications 1 à 2, les zones d'appui (18) et/ou enveloppes (20) présentant une épaisseur d'au moins 0,1 mm.

4.   Equipement de manutention selon la revendication 3, les zones d'appui (18) présentant une épaisseur d'au moins 0,3 mm.

5.   Equipement de manutention selon l'une quelconque des revendications 1 à 4, les zones d'appui (18) et/ou enveloppes (20) étant formées par un matériau composite en matière plastique PTFE et des fibres de renforcement qui y sont intégrées.

6.   Equipement de manutention selon l'une quelconque des revendications 1 à 5, les structures d'appui (22) présentant chacune une épaisseur d'au moins 1,4 mm.

7.   Equipement de manutention selon l'une quelconque des revendications 1 à 6, les structures d'appui (22) étant formées de fil d'acier.

8.   Equipement de manutention selon l'une quelconque des revendications 1 à 7, les zones, portant les emballages, des structures d'appui (22) en métal présentant chacune une épaisseur d'au moins 2 mm.

9.   Equipement de manutention selon l'une quelconque des revendications 1 à 8, la chaîne de manutention (10) présentant une structure réticulaire.

10.  Equipement de manutention selon l'une quelconque des revendications 1 à 9, la chaîne de manutention (10) comprenant plusieurs couches (16, 16a, 16b).

11.  Empaqueteuse de récipients de boissons groupés en emballages et enrobés d'une feuille, comprenant un canal thermique pour l'échauffement de la feuille enrobant les emballages et la contraction thermique de la feuille, et un équipement de manutention horizontal conduit à travers le canal thermique pour les emballages, équipement de manutention horizontal qui présente une chaine de manutention (10) à circulation infinie dont les chainons mobiles et/ou maillons présentent chacun une structure d'appui (22), dont les chainons mobiles et/ou maillons présentent des zones d'appui (18) et/ou des enveloppes (20) pour la manutention des emballages, étant donné que les zones d'appui (18) et/ou enveloppes (20) présentent des parts considérables en matière plastique PTFE, étant donné que les zones d'appui (18) et/ou enveloppes (20) en matière plastique PTFE ont une épaisseur qui correspond au moins à 10 % de l'épaisseur de la structure d'appui (22) qu'elles recouvrent et/ou enveloppent, **caractérisé en ce que** la chaîne de manutention (10) présente une pluralité d'orifices de la structure d'appui (22) et des zones d'appui (11) et/ou enveloppes (30), de manière à ce que les récipients de boissons enrobés de la feuille puissent être alimentés sur tous les côtés au moyen de l'air chaud pendant l'emmanchement de la feuille sur les récipients de boissons, et **en ce que** la chaine de manutention (10) de la structure d'appui (22) et des zones d'appui (18) et/ou enveloppes présente un nombre de Biot $Bi = (2 \ast \alpha \ast r)/\lambda$ supérieur ou égal à 1,0, où $\alpha$ est la résistance à la transmission de chaleur convective de la surface de la structure d'appui (22), r le rayon de la structure d'appui (22) et $\lambda$ la conductibilité thermique des zones d'appui (18) et/ou enveloppes (20).

12.  Empaqueteuse selon la revendication 11 avec un équipement de manutention selon l'une quelconque des revendications 2 à 10.

Fig. 1

Fig. 2

Fig. 3

Fig. 4

Fig. 5

Fig. 6

22

**10**

18, 20

Fig. 7

10

22

18, 20

Fig. 8

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3646880 A
- EP 0655215 A1
- US 5360379 A